# EUROPÄISCHE PATENTSCHRIFT

(11) **EP 2 917 603 B1**
(45) Veröffentlichungstag und Bekanntmachung des Hinweises auf die Patenterteilung: **09.01.2019**
(21) Anmeldenummer: 13786268.6
(22) Anmeldetag: 05.11.2013
(51) Int. Cl.: F16D 55/2265, F16D 55/227

(54) **SCHEIBENBREMSE FÜR EIN NUTZFAHRZEUG**
DISC BRAKE FOR A COMMERCIAL VEHICLE
FREIN À DISQUE DESTINÉ À UN VÉHICULE UTILITAIRE

(30) Priorität: 07.11.2012 DE 102012021690
(43) Veröffentlichungstag der Anmeldung: 16.09.2015
(73) Patentinhaber: KNORR-BREMSE Systeme für Nutzfahrzeuge GmbH, 80809 München (DE)
(72) Erfinder: FISCHER, Rudolf, 85435 Erding (DE); KIELBASA, Rudolf, 85757 Karlsfeld (DE); BALINT, Peter, 71069 Sindelfingen (DE)
(86) Internationale Anmeldenummer: PCT/EP2013/073087
(87) Internationale Veröffentlichungsnummer: WO 2014/072301

(56) Entgegenhaltungen:
- WO-A1-2013/143980
- WO-A1-2013/174964
- DE-A1-102007 008 728
- US-A- 5 439 084
- US-A1- 2004 188 191
- US-A1- 2010 282 547
- Knorr: "Pneumatic Disc Brake KNORR-BREMSE Systems for Commercial Vehicles Index 3 Description and Function 3.1 Disc Brake Sectioned View", , 29 June 2005 (2005-06-29), XP55489545, Retrieved from the Internet: URL:https://www.axletech.com/at-admin/reso urces/y006471-en.pdf [retrieved on 2018-07-02]

## Beschreibung

Die Erfindung betrifft eine Scheibenbremse für ein Nutzfahrzeug nach dem Oberbegriff des Anspruchs 1.

Derartige Scheibenbremsen kommen insbesondere bei schweren Nutzfahrzeugen zum Einsatz. Dabei ist der auch unter der Bezeichnung Schiebesattel bekannte Bremssattel durch Befestigungselemente mit einem fahrzeugseitigen Bremsträger verbunden.

Führungsholme der Befestigungselemente sind mit dem Bremsträger, üblicherweise durch Verschrauben, verbunden, wobei die Führungsholme in Gleitlagern des Bremssattels so geführt sind, dass eine axiale Verschiebung, bezogen auf die Bremsscheibe, gegenüber dem ortsfesten Bremsträger möglich ist. Eines der Gleitlager ist als Festlager mit geringem Gleitspiel ausgebildet, während das andere ein Loslager bildet, um insbesondere Fertigungstoleranzen auszugleichen. Das Festlager übernimmt im Wesentlichen die Funktion einer Hauptführung zur Sicherstellung einer leichtgängigen Verschiebbarkeit bei einer Bremsbetätigung sowie einer Verschleißnachstellung.

Zur bestimmungsgemäßen Funktion weist das Loslager eine den Führungsholm umgreifende und verschiebegesichert am Bremssattel angeschlossene Führungsbuchse auf mit einer elastischen Innenhülse, die aus einem Elastomer besteht. Die Elastizität der Innenhülse verhindert das Entstehen von Klappergeräuschen, wie sie toleranzbedingt bei Loslagern auftreten können. Ein weiterer Vorteil der Elastomer-Innenhülse ergibt sich aus der Robustheit sowie einer einfachen Installation.

Ein Einsatz des Nutzfahrzeuges auf unbefestigten oder stark verschmutzten Straßen kann jedoch durch Steinschlag oder Schmutzbeaufschlagung eine Schädigung der Abdichtung zur Folge haben, wodurch Schmutzwasser in den Führungsbereich der Lagerbuchse eintreten kann, was zu einem stark erhöhten Verschleiß und einem vorzeitigen Austausch der Lagerbuchse führt.

Neben dem Einsatz einer Innenhülse aus einem Elastomer haben sich auch DU-Lager mit beidseitiger Abdichtung als Führungsbuchse bewährt. Allerdings neigen DU-Lager bezüglich ihres Spiels zu einer Geräuschbildung, zu deren Vermeidung zusätzliche Dämpfungsmaßnahmen erforderlich sind.

In jedem Fall müssen die offenen Enden, also die der Bremsscheibe abgewandten Endbereiche mit einem zusätzlichen Bauteil abgedichtet werden, was bei einer in der DE 10 2006 050 647 A1 geoffenbarten Scheibenbremse durch eine aufgesetzte, mit dem Bremssattel verbundene Kappe erfolgt, die den endseitigen Mantelbereich sowie die Stirnseite des Führungsholms überdeckt.

Jedoch sind dazu eine zusätzliche Bearbeitung des Bremssattels sowie eine Montage der Kappe erforderlich, was zu entsprechenden zusätzlichen Kosten führt.

Die DE 10 2007 008728 A1 beschreibt eine Scheibenbremse, insbesondere für ein Nutzfahrzeug, mit einem eine Bremsscheibe umfassenden Bremssattel, der mittels zweier in Gleitlagern geführter Befestigungselemente, bezogen auf die Bremsscheibe, axial verschiebbar an einem ortsfesten Bremsträger befestigt ist, wobei ein Gleitlager als Fest- und das andere als Loslager ausgebildet ist und jeweils eine im Bremssattel gehaltene Gleitbuchse aufweist. Die Scheibenbremse ist so ausgebildet, dass zumindest die dem Loslager zugeordnete Gleitbuchse eine Innenschale aufweist, an der mantelseitig eine aus einem elastischen Material bestehende Schicht anliegt. Ein das Gleitlager auf der der Bremsscheibe zugewandten Seite abdichtender Faltenbalg ist integraler Bestandteil der Gleitbuchse.

Das Dokument US 2010/282547 A1 beschreibt eine Scheibenbremse für ein Nutzfahrzeug. Die Scheibenbremse weist einen Bremssattel auf, der eine Bremsscheibe überspannt. Der Bremssattel ist ortsfest am Fahrzeug an einem Bremsträger mittels zweier Verbindungslager axial in Bezug auf die Bremsscheibe verstellbar angebracht. Jedes Verbindungslager weist eine Führungsstange auf, welche an dem Bremsträger gesichert befestigt und in einem Gleitlager des Bremsträgers für dessen axiale Verstellung geführt ist. Zumindest ein Verbindungslager ist mit einer radial elastischen Dämpfungsbuchse versehen. welche die Führungsstange zumindest in Teilbereichen umgibt und Nuten aufweist, die seitlich durch Rippen begrenzt sind. Die Scheibenbremse ist derart ausgebildet, dass die Dämpfungsbuchse ein progressives Dämpfungsverhalten in der radialen Lastrichtung aufweist.

Die US 5 439 084 A betrifft eine Vorrichtung für einen Schiebesattel einer Scheibenbremse. Die Vorrichtung umfasst eine Halterung, eine Schraube und einen Träger. Der Träger ist verdreh- und verschiebegesichert, mit Ausnahme in einer Richtung senkrecht zu seiner Achse aufgrund eines offenen Rings, der mit einem kleinen Spiel in einer Bohrung der Halterung eingesetzt ist, wobei er seinerseits drehfest ist. Klemmabflachungen sind auf der Außenfläche des Trägers vorgesehen.

WO 2013/143980 A1 beschreibt eine Scheibenbremse mit einem eine Bremsscheibe umfassenden Bremssattel, der an einem Bremsträger durch zwei Befestigungselemente, bezogen auf die Bremsscheibe, axial verschiebbar befestigt ist, wobei ein Befestigungselement als Fest- und das andere als Loslager gestaltet ist und jeweils ein Gleitlager bilden, bestehend aus einer Gleitbuchse und einem darin geführten, mit dem Bremsträger fest verbundenen Führungsholm, an dem zur Abdichtung des dem Bremsträger zugeordneten Austrittsbereichs ein am Führungsholm abstützendes formbares Dichtelement angeordnet ist. Die Scheibenbremse ist so ausgebildet, dass jedes Gleitlager in einer Mantelhülse gehalten ist und damit als vormontierte Baueinheit in eine Aufnahmebohrung des Bremssattels eingepresst ist. Das Dichtelement ist als Rollbalg ausgebildet und dichtend einerseits am Führungsholm und andererseits an der Mantelhülse oder Gleitbuchse befestigt. Ein weiteres Dichtelement, vorzugsweise ein Rollbalg, überdeckt einen an der dem Bremsträger gegenüberliegenden Seite aus dem Bremssattel ragenden Endbereich des Führungsholms. Der Führungsholm ist dabei durch eine Verschlusskappe überdeckt, welche mit dem Bremssattel verbunden ist oder in eine Innenbohrung des Führungsholms eingesteckt und dort gehalten ist. Dieser Rollbalg ist dabei als das weitere Dichtelement so um eine Stirnfläche des Führungsholms geführt, dass er gemeinsam mit der Verschlusskappe eine vollflächige Abdeckung bildet.

Das Dokument "Knorr-Bremse, Service Manual Pneumatic Disc Brake SN6.../ SN7.../ SK...7/ NA7... Disc Brake, 29.06.2015" ist ein Service-Handbuch für eine pneumatische Scheibenbremse, mit einem eine Bremsscheibe umfassenden Bremssattel, der an einem ortsfesten Bremsträger durch zwei Befestigungselemente, bezogen auf die Bremsscheibe, axial verschiebbar befestigt ist, wobei die Befestigungselemente jeweils einen mit dem Bremsträger fest verbundenen Führungsholm aufweisen, von denen zur axialen Verschiebbarkeit des Bremssattels einer als Festlager und der andere in einem als Loslager ausgebildeten Gleitlager geführt ist, wobei zumindest das Loslager eine den Führungsholm umgreifende und verschiebegesichert in einer Sattelbohrung des Bremssattels gehaltene Führungsbuchse mit einer elastischen Innenhülse aufweist, wobei zumindest an dem der Bremsscheibe abgewandten Endbereich des Führungsholms ein diesen gegenüber der Umgebung abdichtender Rollbalg angeordnet ist, der einerseits am Führungsholm und andererseits in der Führungsbuchse befestigt ist. Der Rollbalg ist mittels einer in den Führungsholm eingepressten Kappe am Führungsholm geklemmt.

Der Erfindung liegt die Aufgabe zugrunde, eine verbesserte Scheibenbremse der gattungsgemäßen Art zu schaffen, wobei mit konstruktiv einfachen Mitteln ihre Standzeit erhöht und ihre Herstellungskosten, insbesondere bei Montage, gesenkt werden können.

Diese Aufgabe wird durch eine Scheibenbremse mit den Merkmalen des Anspruchs 1 gelöst.

Damit wird eine Abdichtung gegenüber der Umgebung und damit gegenüber fahrbedingten Einflüssen erreicht, ohne dass eine besondere Bearbeitung des Bremssattels erforderlich ist.

Vor allem beim Einsatz der neuen Scheibenbremse in Nutzfahrzeugen, die einer erhöhten Steinschlag- und Verschmutzungsgefahr ausgesetzt sind, verlängert sich durch die Erfindung die Standzeit der Scheibenbremse in dem durch die Befestigungselemente beeinflussten Maß.

Nach einer vorteilhaften Weiterbildung der Erfindung ist der erste Rollbalg einstückig mit der aus Kunststoff bestehenden Innenhülse ausgebildet, d.h., angeformt, wobei die Innenhülse von einem eine Außenhülse bildenden, mit einem umlaufenden sich am Bremssattel abstützenden Kragen versehenen Blechmantel umhüllt ist, an dem die Innenhülse befestigt ist. Diese ist bevorzugt aus einer sogenannten HNBR-Elastomerhülse gebildet.

An den gegenüberliegenden Endbereich der Innenhülse ist ein zweiter Rollbalg angeschlossen, der, da dieser auf der der Bremsscheibe zugewandten Seite einer höheren, insbesondere thermischen Belastung ausgesetzt ist, bevorzugt aus beispielsweise Silikon besteht, das gegenüber höheren Temperaturen beständiger ist.

Dieser zweite Rollbalg kann an einen Anschlagring angespritzt sein, der durch stirnseitiges Verklipsen an der Führungsbuchse befestigt ist. Der gegenüberliegende Endbereich des zweiten Rollbalgs hingegen ist in einer umfänglichen Ringnut des Führungsholms formschlüssig gehalten.

In jedem Fall sind der erste und der zweite Rollbalg in axialer Richtung verformbar, d.h., sie werden bei einer Relativverschiebung der Innenhülse bzw. des Bremssattels zum Führungsholm entsprechend gestülpt bzw. gestreckt, unter Beibehaltung der Überdeckung des zu schützenden Bereichs des Führungsholms.

Der metallische Anschlagring mit dem angespritzten zweiten Rollbalg aus hochtemperaturbeständigem Silikon erfüllt sowohl die Funktion eines radialen wie auch eines axialen Anschlags und dient als radiale Dichtung gegenüber dem Führungsholm, wenn im Verbindungsbereich mit dem Anschlagring an den zweiten Rollbalg eine Dichtlippe angeformt ist, die am Führungsholm dichtend anliegt.

Die formschlüssige Sicherung des zweiten Rollbalgs in der Ringnut des Führungsholms erfolgt mittels eines Halterings, der auf der der Bremsscheibe zugewandten Seite in den Bremssattel eingefügt ist.

Dabei wird durch den Haltering der zweite Rollbalg gegen die beim Bremsen entstehende Wärme abgeschirmt und eine mechanische Beschädigung verhindert. Die Dichtwirkung eines in der Ringnut des Führungsholms einliegenden Wulstes des zweiten Rollbalgs wird unterstützt durch den mit gewissem Anpressdruck außenseitig anliegenden Haltering.

Dabei ist der Haltering in seiner Form derart gestaltet, dass er den Stülpweg des zweiten Rollbalgs begrenzt und somit einen Sicherheitsabstand zu der der Bremsscheibe zugewandten Seite gewährleistet.

In diesem Sinne könnte auch ein Schutz für den gegenüberliegenden ersten Rollbalg erreicht werden, wobei, je nach Bedarf, ein axialer oder radialer Bauraum vollständig durch den gestülpten Rollbalg ausgenutzt wird.

Der zweite Rollbalg kann an dem Anschlagring angespritzt sein, wobei eine Verbindung des zweiten Rollbalgs einen Ringabschnitt, Stegabschnitte und einen Verbindungsabschnitt des zweiten Rollbalgs 14 umfasst. Dabei ist der Ringabschnitt in einer umlaufenden Ringnut des Anschlagrings aufgenommen ist, wobei die Stegabschnitte jeweils in in Längsrichtung des zweiten Rollbalgs verlaufenden Stegnuten des Anschlagrings angeordnet sind, und wobei der Verbindungsabschnitt einen Randabschnitt des Anschlagrings umgibt. Auf diese Weise wird ein vorteilhafte axiale und verdrehsichere Festlegung zwischen dem zweiten Rollbalg und dem Anschlagring ermöglicht.

Für eine vorteilhafte, zielgerichtete Aufrollung kann der zweite Rollbalg eine Profilierungsabschnitt aufweisen. So kann auch eine bestimmte Beulstabilität vorteilhaft erreicht werden. Hierbei kann dieser Profilierungsabschnitt des zweiten Rollbalgs z.B. Längsnuten aufweisen.

Im Übrigen können vorhandene Scheibenbremsen, deren Loslager beidseitig abgedichtet ist, im Servicefall ohne weiteres auf ein Gleitlager gemäß der Erfindung umgestellt werden.

Das Gleitlager ist als Baueinheit mit beiden Rollbälgen und dem Führungsholm sowie dem Anschlagring vormontiert und kann als gefettete Patrone in eine Sattelbohrung eingeschoben werden, wobei die zweiteilige Ausführung, d.h., eine Bestückung mit dem ersten und zweiten Rollbalg, eine Fehlmontage durch den am Bremssattel anliegenden Kragen der Außenhülse ausschließt.

Die Führungsbuchse kann als DU-Lager ausgebildet sein, also aus einer Kombination einer inneren Kunststoffschicht mit einer äußeren Blechhülse, bei der dann der erste Rollbalg an die Kunststoffschicht angeformt oder mit dieser oder der Blechhülse verbunden ist.

Üblicherweise ist der Führungsholm mittels einer Kopfschraube am Bremsträger befestigt, wobei der Kopf der Kopfschraube auf seiner der Bremsscheibe gegenüberliegenden Seite durch eine in den Führungsholm eingelassene Kappe überdeckt ist. Diese Kappe kann so geformt sein, dass sie einen Aufnahmeraum für den ersten Rollbalg bildet.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Scheibenbremse in einer schematischen Draufsicht;
- Figuren 2 und 3: jeweils ein Ausführungsbeispiel der Erfindung in unterschiedlichen Betriebsstellungen in einem Längsschnitt des Teilausschnitts gemäß der Kennzeichnung "X" in Figur 1;
- Figuren 4 und 5: jeweils ein weiteres Ausführungsbeispiel der Erfindung entsprechend der Darstellung nach den Figuren 2 und 3;
- Figur 6: eine Einzelheit der erfindungsgemäßen Scheibenbremse in einer geschnittenen perspektivischen Ansicht;
- Figur 7: ein noch weiteres Ausführungsbeispiel der erfindungsgemäßen Scheibenbremse in einer geschnittenen perspektivischen Ansicht einer Einzelheit;
- Figur 8 und 9: geschnittene perspektivische Ansichten eines zweiten Rollbalgs des weiteren Ausführungsbeispiels nach Figur 7;
- Figur 10: eine perspektivische Ansicht eines Anschlagrings des weiteren Ausführungsbeispiels nach Figur 7;
- Figur 11: eine perspektivische Ansicht einer Einzelheit des weiteren Ausführungsbeispiels nach Figur 7; und
- Figur 12 und 13: Schnittansichten des weiteren Ausführungsbeispiels der erfindungsgemäßen Scheibenbremse nach Figur 7.

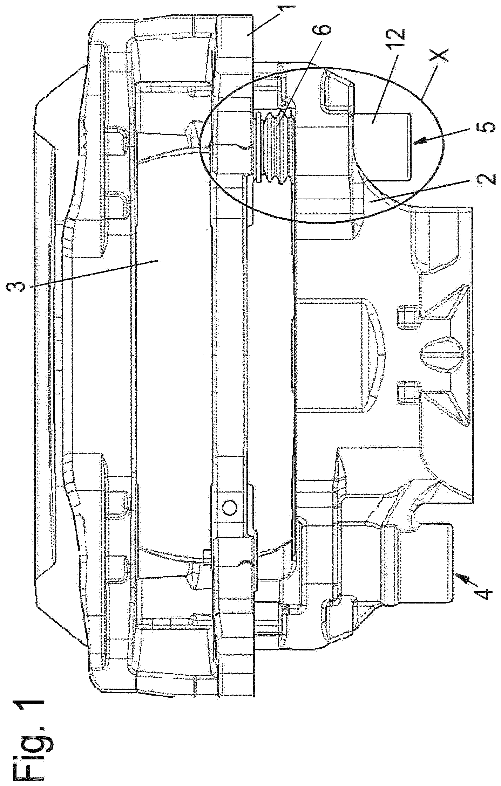

In der Figur 1 ist eine Scheibenbremse für ein Nutzfahrzeug gezeigt mit einem eine Bremsscheibe 3 übergreifenden Bremssattel 2, der an einem Bremsträger 1 des Nutzfahrzeuges, bezogen auf die Bremsscheibe 3, axial verschiebbar angeschlossen ist.

Hierzu sind zwei Befestigungselemente vorgesehen, von denen eines ein Festlager 4 und das andere ein Loslager 5 bilden.

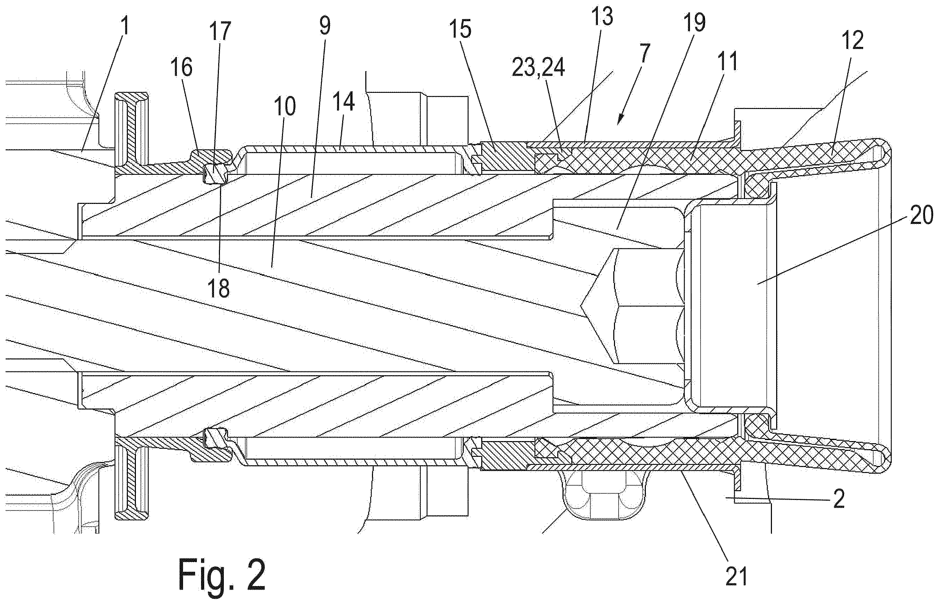

Das in den Figuren 2-5 als Einzelheit dargestellte Loslager 5 weist einen Führungsholm 9 auf, der mittels einer zentral durchgeführten Kopfschraube 10 mit dem Bremsträger 1 fest verbunden ist.

Der Bremssattel 2 ist mit einer verschiebegesichert darin gehaltenen Führungsbuchse 7 auf dem Führungsholm 9 verschiebbar gelagert, wobei die Führungsbuchse 7 eine elastische Innenhülse 11 und eine diese umschließende metallische Außenhülse 13 aufweist, die in eine Sattelbohrung 21 des Bremssattels 2 gepresst ist und sich außenseitig mit einem umlaufenden Kragen 8 am Bremssattel 2 abstützt.

Die Innenhülse 11 besteht aus einem Kunststoff, bevorzugt einem Elastomer, und ist an die Außenhülse 13 angespritzt. Innenseitig stützt sich die Innenhülse 11 am Führungsholm 9 ab.

Erfindungsgemäß ist in dem der Bremsscheibe 3 abgewandten Endbereich des Führungsholms 9 ein erster Rollbalg 12 vorgesehen, der den Führungsholm 9 gegenüber der Umgebung abdichtet und der einerseits am Führungsholm 9 und andererseits an der Führungsbuchse 7 befestigt ist.

Entsprechend den gezeigten Ausführungsbeispielen ist der erste Rollbalg 12 einstückig mit der Innenhülse 11 ausgebildet, d.h., er besteht aus demselben Material. Zur Festlegung des ersten Rollbalgs 12 am Führungsholm 9 ist der erste Rollbalg 12 mit seinem freien Ende mittels einer Kappe 20, die einen Kopf 19 der Kopfschraube 10 überdeckt und die stirnseitig in den Führungsholm 9 eingepresst ist, verklemmt.

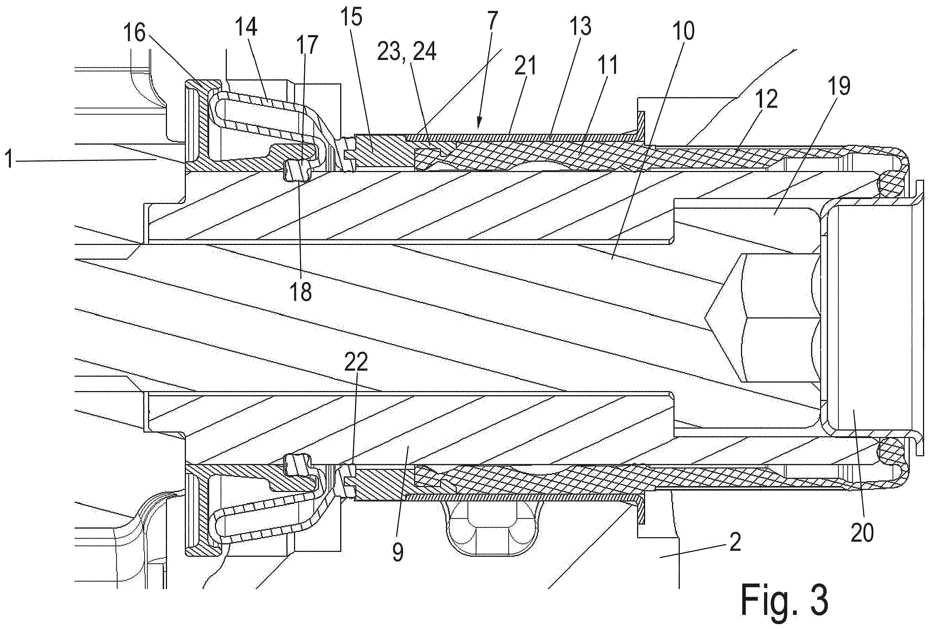

Die Figuren 2 und 3 zeigen unterschiedliche Stellungen des Bremssattels 2 zum Bremsträger 1, wobei die Figur 2 eine Position mit unverschlissenen, nicht dargestellten Bremsbelägen wiedergibt und die Figur 3 die Stellung des Bremssattels 2 bei verschlissenen Bremsbelägen, wobei hier der Bremssattel 2 weiter zum Bremsträger 1 hin verschoben ist, unter Streckung des ersten Rollbalges 12.

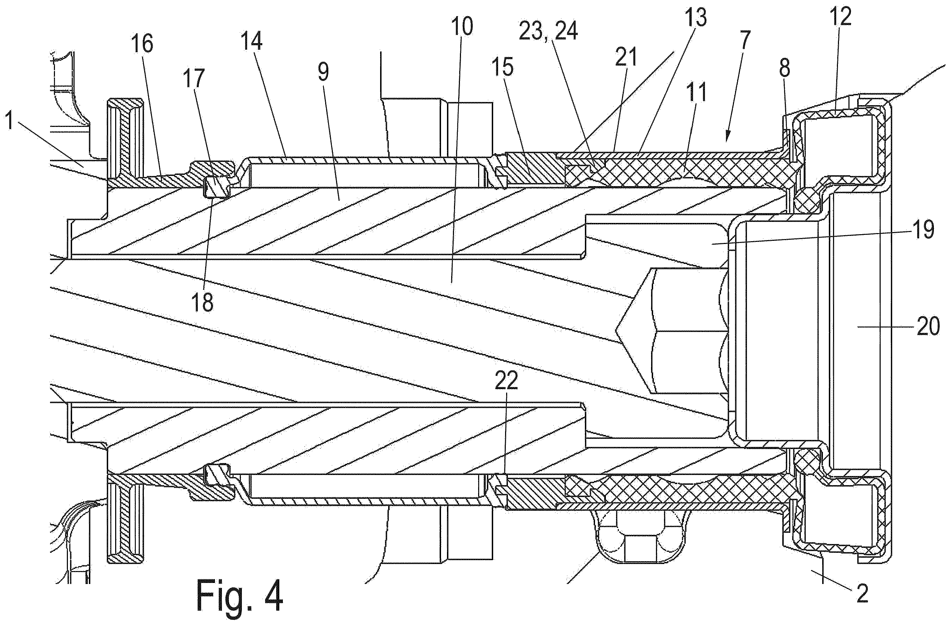

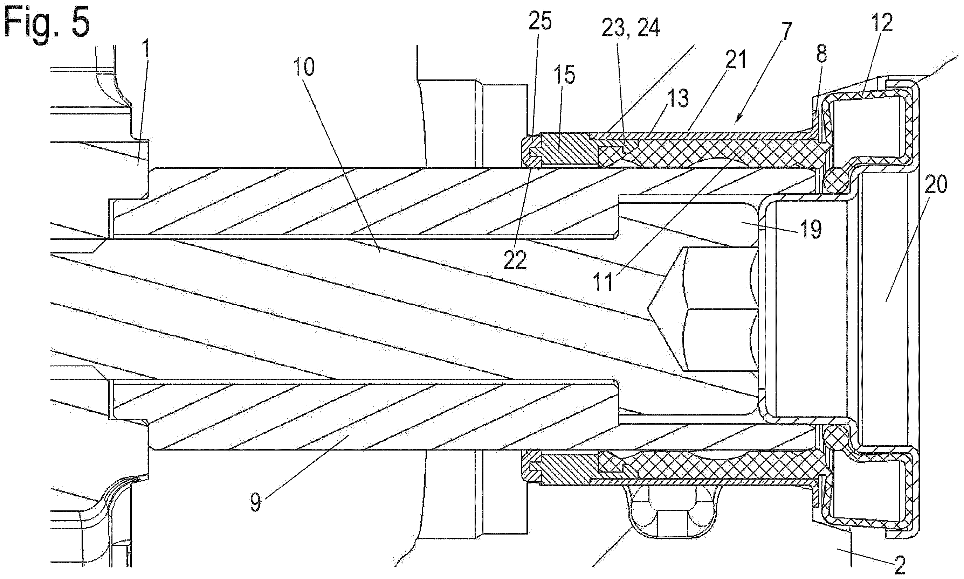

Eine besonders kurze Bauform des gerollten ersten Rollbalgs 12 ergibt sich bei dem in den Figuren 4 und 5 gezeigten Beispiel, bei dem die Kappe 20 derart ausgebildet ist, dass sie zur Stirnseite des Führungsholms 9 hin einen Aufnahmeraum für den ersten Rollbalg 12 bildet, bei einer Position des Bremssattels 2 entsprechend der Figur 2.

Bei den Ausführungsbeispielen nach den Figuren 2 und 4 ist an dem dem ersten Rollbalg 12 abgewandten Ende der Führungsbuchse 7 ein zweiter Rollbalg 14 angeschlossen, der den freien Mantelbereich des Führungsholms 9 überdeckt.

Dabei ist der zweite Rollbalg 14 einerseits mit der Führungsbuchse 7 und andererseits mit dem Führungsholm 9 verbunden, wobei zur Verbindung mit der Führungsbuchse 7 ein Anschlagring 15 vorgesehen ist, der mit einer umlaufenden Rastnase 23 in eine umlaufende Rastausnehmung 24 der Innenhülse 11 formschlüssig eingreift, während der zweite Rollbalg 14 am anderen Randbereich an den Anschlagring 15 angespritzt ist.

Zur Verbindung des zweiten Rollbalgs 14 mit dem Führungsholm 9 ist in diesen eine umlaufende Ringnut 18 eingelassen, in der ein angeformter Wulst 17 des zweiten Rollbalgs 14 einliegt und durch einen Haltering 16, der mit dem Bremssattel 2 verbunden ist, gesichert ist. Dabei liegt ein Schenkel des Halterings 16 außenseitig am Wulst 17 an und drückt diesen unter Vorspannung in die Ringnut 18.

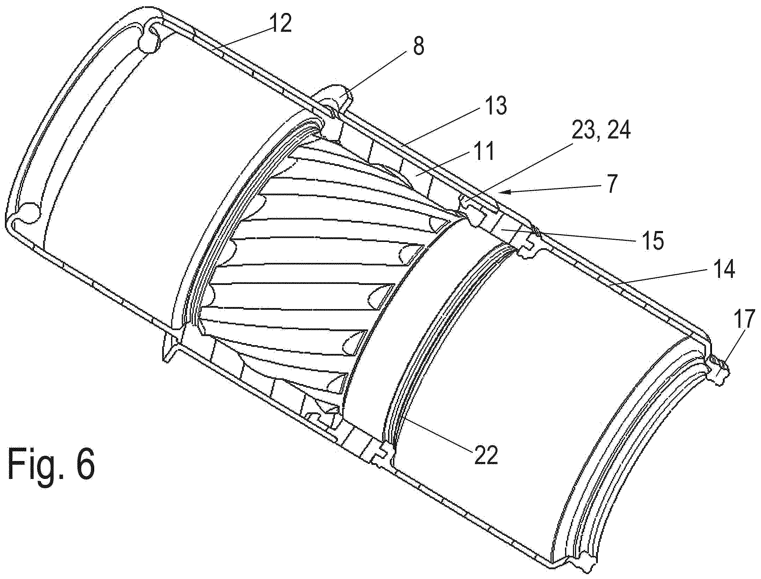

Wie insbesondere die Figur 6 sehr deutlich wiedergibt, die die Führungsbuchse 7 als Einzelheit zeigt, ist im Verbindungsbereich mit dem Anschlagring 15 an den zweiten Rollbalg 14 mindestens eine umlaufende Dichtlippe 22 angeformt, die unter Vorspannung am Führungsholm 9 anliegt und als Dichtung und Abstreifer fungiert.

Bei dem in der Figur 5 gezeigten Beispiel ist lediglich der erste Rollbalg 12 vorgesehen, während die Abdichtung der Führungsbuchse 7 am gegenüberliegenden Ende durch Dichtlippen 22, die an einen an den Anschlagring angespritzten Dichtring 25 angeformt sind, erfolgt.

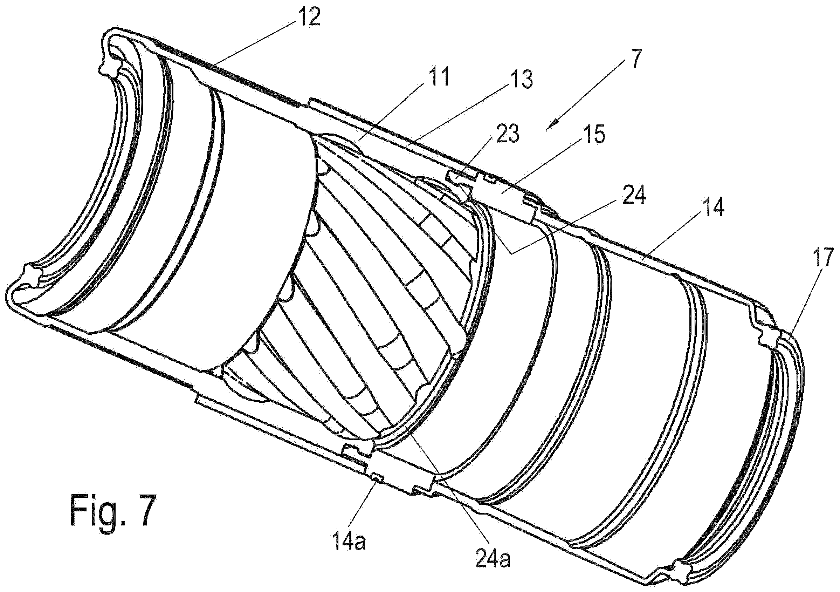

Figur 7 zeigt ein noch weiteres Ausführungsbeispiel der erfindungsgemäßen Scheibenbremse in einer geschnittenen perspektivischen Ansicht einer Einzelheit.

Der erste Rollbalg 12 ist in der Führungsbuchse 7 wie oben beschrieben angebracht und mit dem Anschlagring 15 über die bereits oben erläuterte Rastausnehmung 24, welche mit der umlaufenden Rastnase 23 des Anschlagrings 15 in Eingriff steht, verbunden. Im Inneren der Innenhülse 11 ist der zum zweiten Rollbalg 14 weisende Rand innen mit einer Innenkante 24a ausgebildet, die radial nach innen weist.

Dabei weist der Aufbau dieser Einzelheit Unterschiede zu dem Aufbau nach Figur 6 auf, die im Folgenden beschrieben werden.

Die Führungsbuchse 7 ist in diesem weiteren Ausführungsbeispiel ohne Kragen 8 ausgebildet und ist dadurch mit einer durchgehenden Außenfläche versehen.

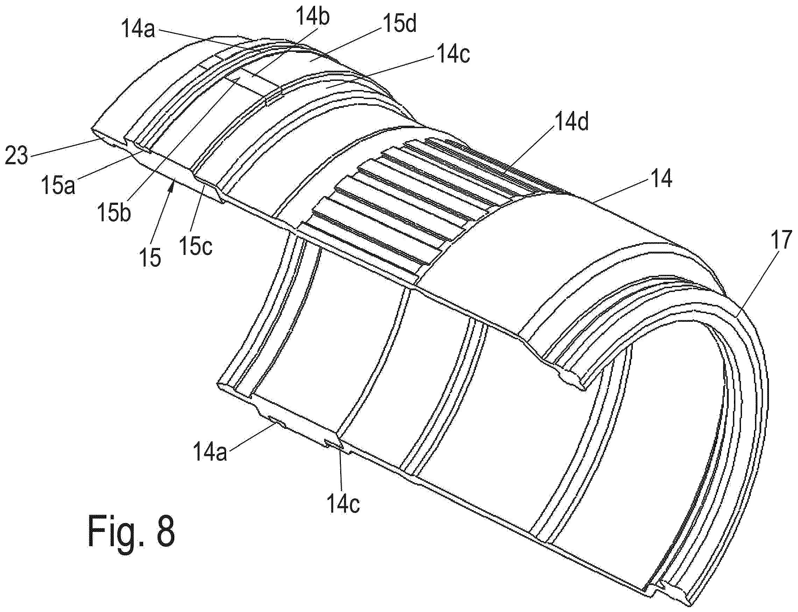

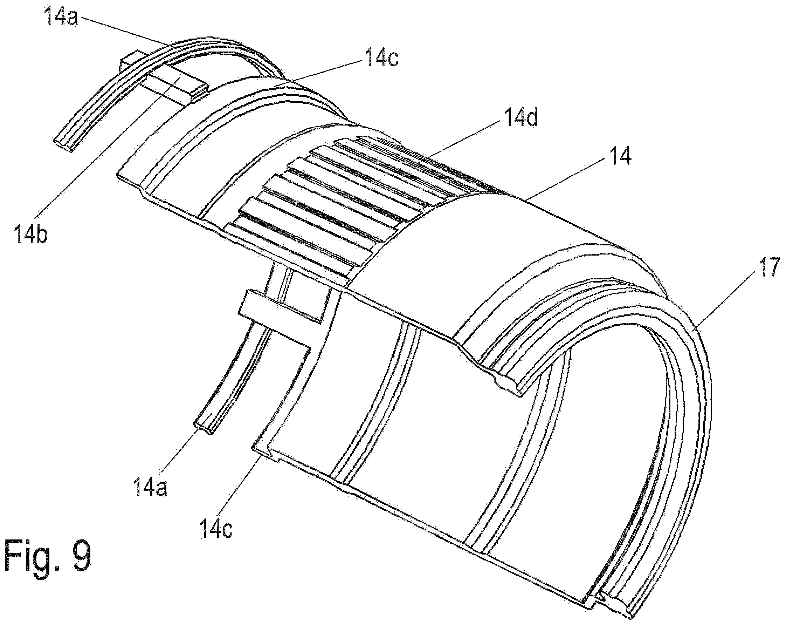

Der zweite Rollbalg 14 weist keine innere Dichtlippe 22 auf und ist mit dem Anschlagring 15 unter anderem über einen Ringabschnitt 14a in einer besonderen Weise verbunden, die im Zusammenhang mit den Figuren 8 und 9 erläutert wird.

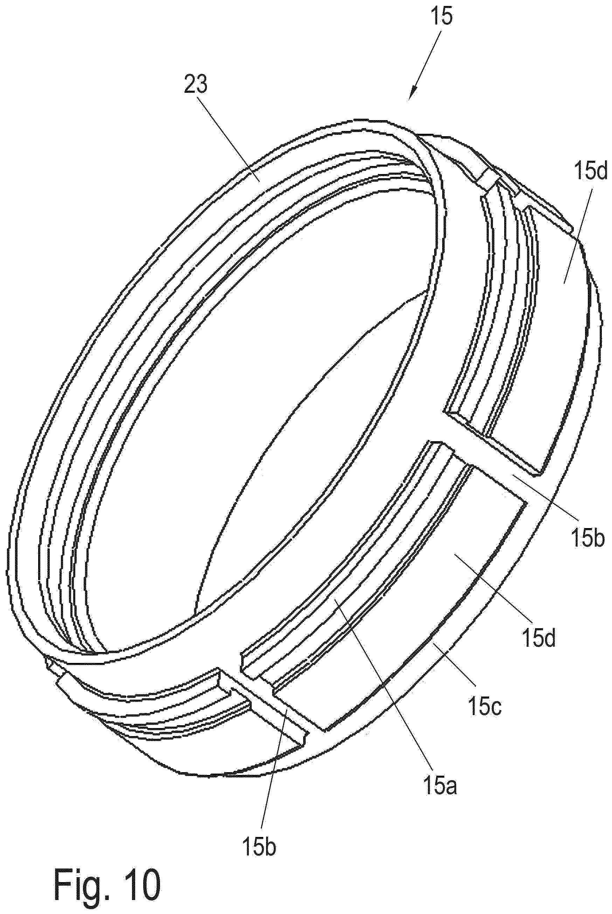

Figur 8 und 9 zeigen geschnittene perspektivische Ansichten des zweiten Rollbalgs 14 des weiteren Ausführungsbeispiels nach Figur 7. In Figur 10 ist eine perspektivische Ansicht des Anschlagrings 15 des weiteren Ausführungsbeispiels nach Figur 7 dargestellt.

In Figur 8 ist der zweite Rollbalg 14 an den Anschlagring 15 angespritzt gezeigt, wohingegen Figur 9 den zweiten Rollbalg 14 allein darstellt.

Die Verbindung des zweiten Rollbalgs 14 mit dem Anschlagring 15 umfasst einen Ringabschnitt 14a, welcher über mehrere in Längsrichtung des zweiten Rollbalgs 14 am Umfang verteilt angeordnete Stegabschnitte 14b an einem umlaufenden Verbindungsabschnitt 14c des zweiten Rollbalgs 14 angebracht ist.

Der Ringabschnitt 14a ist in einer umlaufenden Ringnut 15a des Anschlagrings 15 aufgenommen. Die Stegabschnitte 14b sind jeweils in in Längsrichtung des zweiten Rollbalgs 14 verlaufenden Stegnuten 15b des Anschlagrings 15 angeordnet. Die Stegnuten 15b sind in einem Körper 15d des Anschlagrings 15 eingeformt und legen zwischen sich umlaufende, radial hervorstehende Körperabschnitte 15d fest. Dies ist besonders in Figur 10 zu erkennen. Der Verbindungsabschnitt 14c umgibt einen Randabschnitt 15c des Anschlagrings 15, wobei der Verbindungsabschnitt 14c einen radial erweiterten Abschnitt zu dem sich anschließenden Mittelteil des zweiten Rollbalgs 14 bildet.

Der Verbindungsabschnitt 14c ist an dem sich anschließenden Mittelteil über einen umlaufenden Absatz angeformt. Dabei ist ein Innendurchmesser des Verbindungsabschnitts 14c größer als ein Innendurchmesser des sich anschließenden Mittelteils. Auf diese Weise umgreift der Verbindungsabschnitt 14c des zweiten Rollbalgs 14 mit seinem Innendurchmesser den Randabschnitt 15c des Anschlagrings 15, wobei der umlaufende Absatz zwischen dem Verbindungsabschnitt 14c und dem sich anschließenden Mittelteil des zweiten Rollbalgs 14 mit seiner inneren Stirnseite an einer Stirnseite des Randabschnitts 15c des Anschlagrings 15 anliegt und so einen axialen Anschlag des zweiten Rollbalgs 14 bildet.

Die Verbindung zwischen dem zweiten Rollbalg 14 und dem Anschlagring 15 ist hier durch ein Anspritzen des Ringabschnitt 14a, der Stegabschnitte 14b und des Verbindungsabschnitts 14c des zweiten Rollbalgs 14 an den Anschlagring 15 realisiert. Auf diese Weise ist der zweite Rollbalg 14 an dem Anschlagring 15 einerseits axial durch den Ringabschnitt 14a in der Ringnut 15a und verdrehsicher durch die Stegabschnitte 14b in den Stegnuten 15b gehalten.

Der sich in Längsrichtung des zweiten Rollbalgs 14 anschließende Mittelteil weist ungefähr in seiner Mitte an der Außenseite einen Profilierungsabschnitt 14d auf, an den sich weiter in Längsrichtung des zweiten Rollbalgs 14 ein zylindrischer Bereich mit einer glatten Außenwand anschließt, die am Ende in die Wulst 17 übergeht.

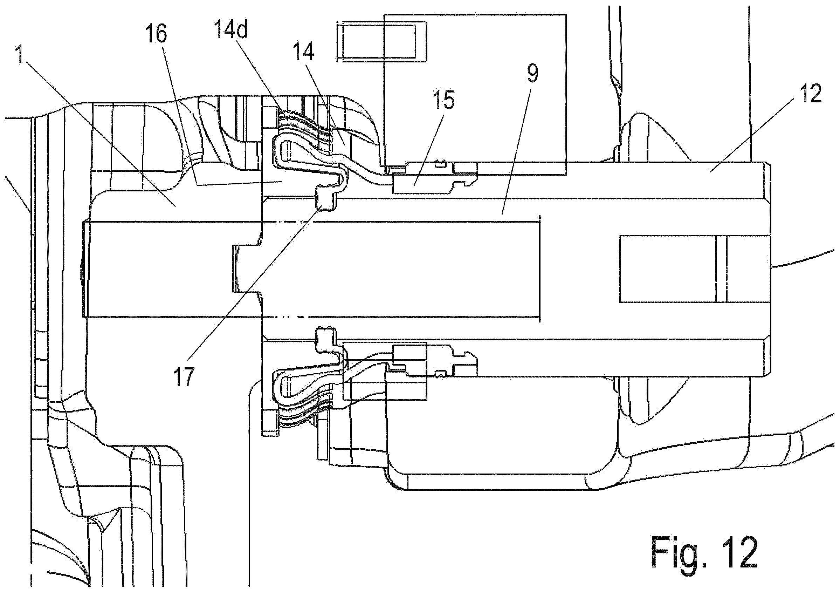

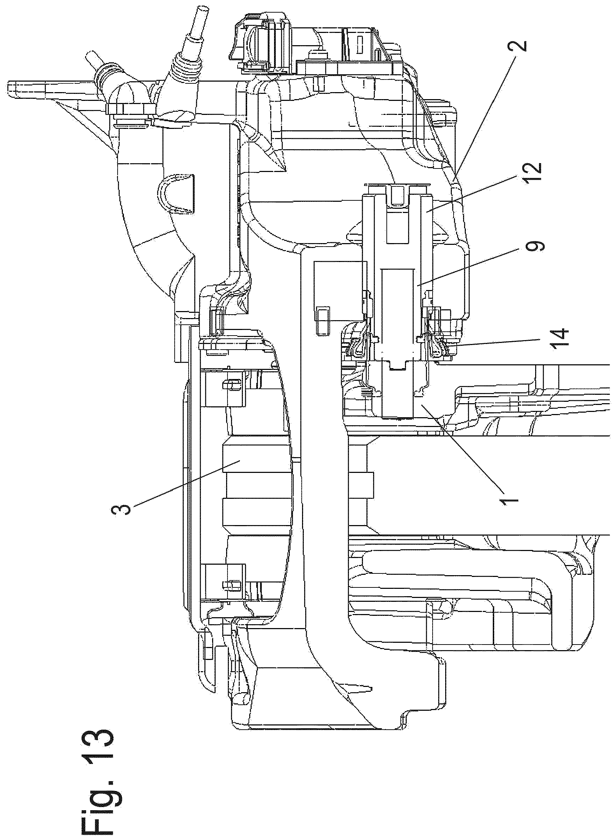

Der Profilierungsabschnitt 14d ist hier mit Längsnuten gebildet, welche in den Körper des Mittelteils des zweiten Rollbalgs 14 eingeformt sind. Dabei sind so genannte Züge und Felder gebildet. Der Außendurchmesser dieser Felder entspricht hier dem Außendurchmesser des gesamten Mittelteils des zweiten Rollbalgs 14. Der Profilierungsabschnitt 14d dient zur gezielten Aufrollbewegung und Beulstabilität des zweiten Rollbalgs 14 bei verschleißenden Bremsbelägen. Diese Betriebsstellung mit aufgerolltem zweiten Rollbalgs 14 ist in Figur 12 und 13 gezeigt und deutlich erkennbar.

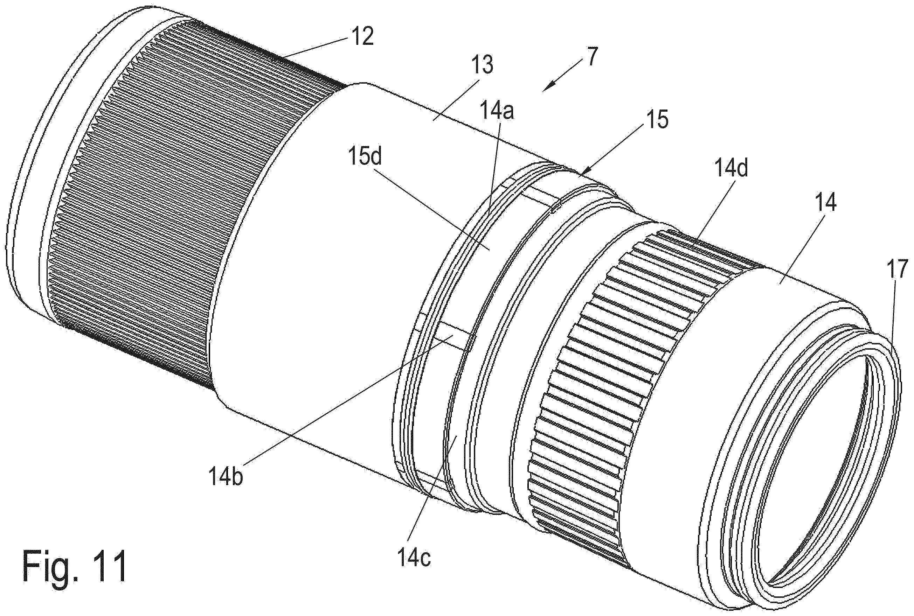

Figur 11 zeigt eine perspektivische Ansicht der Einzelheit des weiteren Ausführungsbeispiels nach Figur 7. Hierbei ist besonders der Profilierungsabschnitt 14d des zweiten Rollbalgs 14 zu erkennen. Auch der erste Rollbalg 12 weist eine nicht näher bezeichnete Profilierung auf.

In den Figuren 12 und 13 sind Schnittansichten des weiteren Ausführungsbeispiels der erfindungsgemäßen Scheibenbremse nach Figur 7 in einer Betriebsstellung bei verschlissenen Bremsbelägen dargestellt. Es ist in Figur 12 deutlich erkennbar, dass der über die Wulst 17 in dem Führungsholm 9 axial gehaltene zweite Rollbalg 14 mit dem Profilierungsabschnitt 14d an dem Haltering 16 gezielt aufgerollt ist.

Die Führungsbuchse 7 mit der Innenhülse 11 und dem ersten Rollbalg 12 und der zweite Rollbalg 14 mit dem Anschlagring 15 können separat voneinander von verschiedenen Seiten her montiert werden. Dann erfolgt eine Verrastung von Rastnase 23 des Anschlagrings 15 und der Rastausnehmung 24 der Innenhülse 11 durch axiales Ineinanderdrücken.

Die Erfindung ist nicht auf die beschriebenen Ausführungsbeispiele beschränkt, sondern kann im Rahmen der Ansprüche modifiziert werden.

### Bezugszeichenliste

- 1: Bremsträger
- 2: Bremssattel
- 3: Bremsscheibe
- 4: Festlager
- 5: Loslager
- 6: Faltenbalg
- 7: Führungsbuchse
- 8: Kragen
- 9: Führungsholm
- 10: Kopfschraube
- 11: Innenhülse
- 12: Erster Rollbalg
- 13: Außenhülse
- 14: Zweiter Rollbalg
- 14a: Ringabschnitt
- 14b: Stegabschnitt
- 14c: Verbindungsabschnitt
- 14d: Profilierungsabschnitt
- 15: Anschlagring
- 15a: Ringnut
- 15b: Stegnut
- 15c: Randabschnitt
- 15d: Körperabschnitt
- 16: Haltering
- 17: Wulst
- 18: Ringnut
- 19: Kopf
- 20: Kappe
- 21: Sattelbohrung
- 22: Dichtlippe
- 23: Rastnase
- 24: Rastausnehmung
- 24a: Innenkante
- 25: Dichtring

## Patentansprüche

1. Scheibenbremse für ein Nutzfahrzeug, mit einem eine Bremsscheibe (3) umfassenden Bremssattel (2), der an einem ortsfesten Bremsträger (1) durch zwei Befestigungselemente, bezogen auf die Bremsscheibe (3), axial verschiebbar befestigt ist, wobei die Befestigungselemente jeweils einen mit dem Bremsträger (1) fest verbundenen Führungsholm (9) aufweisen, von denen zur axialen Verschiebbarkeit des Bremssattels (2) einer als Festlager (4) und der andere in einem als Loslager (5) ausgebildeten Gleitlager geführt ist, wobei zumindest das Loslager (5) eine den Führungsholm (9) umgreifende und verschiebegesichert in einer Sattelbohrung (21) des Bremssattels (2) gehaltene Führungsbuchse (7) mit einer elastischen Innenhülse (11) aufweist, wobei zumindest an dem der Bremsscheibe (3) abgewandten Endbereich des Führungsholms (9) ein diesen gegenüber der Umgebung abdichtender erster Rollbalg (12) angeordnet ist, der einerseits am Führungsholm (9) und andererseits in der Führungsbuchse (7) befestigt ist, wobei der erste Rollbalg (12) mittels einer in den Führungsholm (9) eingepressten Kappe (20) am Führungsholm (9) geklemmt ist, wobei an der dem ersten Rollbalg (12) gegenüberliegenden Seite der Führungsbuchse (7) ein zweiter Rollbalg (14) angeschlossen ist, der andererseits mit dem Führungsholm (9) verbunden ist,
**dadurch gekennzeichnet, dass**
der zweite Rollbalg (14) an einem Anschlagring (15) befestigt ist, der mit der Führungsbuchse (7) verbunden ist, vorzugsweise verrastet.

2. Scheibenbremse nach Anspruch 1, **dadurch gekennzeichnet, dass** der erste Rollbalg (12) einstückig mit der aus Kunststoff bestehenden Innenhülse (11) ausgebildet ist.

3. Scheibenbremse nach Anspruch 1 oder 2, **dadurch gekennzeichnet, dass** der erste Rollbalg (12) und die Innenhülse (11) aus einem Elastomer bestehen.

4. Scheibenbremse nach einem der vorhergehenden Ansprüche, **dadurch gekennzeichnet, dass** der erste Rollbalg (12) mit seinem freien Ende an der Stirnseite des Führungsholms (9) befestigt ist, vorzugsweise geklemmt.

5. Scheibenbremse nach einem der vorhergehenden Ansprüche, **dadurch geknnzeichnet, dass** der zweite Rollbalg (14) an seiner dem Anschlagring (15) abgewandten Kante einen Wulst (17) aufweist, der in einer Ringnut (18) des Führungsholms (9) einliegt.

6. Scheibenbremse nach Anspruch 5, **dadurch gekennzeichnet, dass** der Wulst (17) durch einen im Bremssattel (2) befestigten Haltering (16) in der Ringnut (18) gehalten ist.

7. Scheibenbremse nach einem der vorhergehenden Ansprüche, **dadurch gekennzeichnet, dass** der zweite Rollbalg (14) aus einem temperaturbeständigen Silikon besteht.

8. Scheibenbremse nach einem der vorhergehenden Ansprüche, **dadurch gekennzeichnet, dass** der zweite Rollbalg (14) an dem Anschlagring (15) angespritzt ist, wobei eine Verbindung des zweiten Rollbalgs (14) einen Ringabschnitt (14a), Stegabschnitte (14b) und einen Verbindungsabschnitt (14c) des zweiten Rollbalgs 14 umfasst.

9. Scheibenbremse nach Anspruch 8, **dadurch gekennzeichnet, dass** der Ringabschnitt (14a) in einer umlaufenden Ringnut (15a) des Anschlagrings (15) aufgenommen ist, wobei die Stegabschnitte (14b) jeweils in in Längsrichtung des zweiten Rollbalgs (14) verlaufenden Stegnuten (15b) des Anschlagrings (15) angeordnet sind, und wobei der Verbindungsabschnitt (14c) einen Randabschnitt (15c) des Anschlagrings (15) umgibt.

10. Scheibenbremse nach Anspruch 8 oder 9, **dadurch gekennzeichnet, dass** der zweite Rollbalg (14a) eine Profilierungsabschnitt (14d) aufweist.

11. Scheibenbremse nach Anspruch 10, **dadurch gekennzeichnet, dass** der Profilierungsabschnitt (14d) des zweiten Rollbalgs (14) Längsnuten aufweist.

12. Scheibenbremse nach einem der vorhergehenden Ansprüche, **dadurch gekennzeichnet, dass** an den Anschlagring (15) ein Dichtring (25) angeschlossen ist.

13. Scheibenbremse nach Anspruch 12, **dadurch gekennzeichnet, dass** der Dichtring (25) oder der zweite Rollbalg (14) im Anschlussbereich an den Anschlagring (15) mit mindestens einer umlaufenden Dichtlippe (22) versehen ist, die an der Mantelfläche des Führungsholms (9) und/oder der Wandung der Sattelbohrung (21) anliegt.

14. Scheibenbremse nach einem der vorhergehenden Ansprüche, **dadurch gekennzeichnet, dass** die Kappe (20) zur Aufnahme des ersten Rollbalgs (12) zur Stirnseite des Führungsholms (9) hin einen Aufnahmeraum bildet.

## Claims

1. A disc brake for a commercial vehicle having a brake calliper (2) which encompasses a brake disc (3) and is fixed such that it is able to slide axially in relation to the brake disc (3) to a stationary brake carrier (1) by two fixing elements, said fixing elements each having a guide rod (9), which is connected permanently to the brake carrier (1), one of these guide rods being guided as a fixed bearing (4) and the other being guided in a slide bearing designed as a floating bearing (5) to ensure the axial mobility of the brake calliper (2), at least the floating bearing (5) having a guide sleeve (7) which has an elastic inner sleeve (11), encompasses the guide rod (9) and is held such that it is unable to move in a calliper hole (21) in the brake calliper (2), there being arranged at least in the end region of the guide rod (9) facing away from the brake disc (3) a first air bellows (12) which seals the guide rod (9) against the environment and is fixed on one hand to the guide rod (7) and on the other to the guide sleeve (7), the first air bellows (12) being clamped to the guide rod (9) by means of a cap (20) pressed into the guide rod (9), there being connected to the side of the guide sleeve (7) opposite the first air bellows (12) a second air bellows (14), which is connected on the other side to the guide rod (9),
**characterised in that**
the second air bellows (14) is fixed, preferably by means of a catch mechanism, to a stop ring (15) which is connected to the guide sleeve (7).

2. A disc brake according to claim 1, **characterised in that** the first air bellows (12) is formed in one piece with the plastic inner sleeve (11).

3. A disc brake according to claim 1 or 2, **characterised in that** the first air bellows (12) and the inner sleeve (11) are made of an elastomer.

4. A disc brake according to any of the preceding claims, **characterised in that** the free end of the first air bellows (12) is fixed, preferably clamped, to the front end of the guide rod (9).

5. A disc brake according to any of the preceding claims, **characterised in that** the edge of the second air bellows (14) facing away from the stop ring (15) has a bead (17) which lies in an annular groove in the guide rod (9).

6. A disc brake according to claim 5, **characterised in that** the bead (17) is held in the annular groove (18) by a retaining ring (16) fixed in the brake calliper (2).

7. A disc brake according to any of the preceding claims, **characterised in that** the second air bellows (14) is made of a temperature-resistant silicon.

8. A disc brake according to any of the preceding claims, **characterised in that** the second air bellows (14) is sprayed onto the stop ring (15), a connection between the second air bellows (14) comprising an annular section (14a), supporting sections (14b) and a connecting section (14c) of the second air bellows (14),

9. A disc brake according to claim 8, **characterised in that** the annular section (14a) is accommodated in a circumferential annular groove (15a) of the stop ring (15), the supporting sections (14b) each being arranged in supporting grooves (15b) of the stop ring (15) which run in the longitudinal direction of the second air bellows (14) and the connecting section (14c) surrounding an edge section (15c) of the stop ring (15).

10. A disc brake according to claim 8 or 9, **characterised in that** the second air bellows (14) has a profiled section (14d).

11. A disc brake according to claim 10, **characterised in that** the profiled section (14d) of the second air bellows (14) has longitudinal grooves.

12. A disc brake according to any of the preceding claims, **characterised in that** a sealing ring (25) is connected to the stop ring (15).

13. A disc brake according to claim 12, **characterised in that** the sealing ring (25) or the second air bellows (14) is provided in the region of the connection to the stop ring (15) with at least one circumferential sealing lip (22), which abuts the lateral surface of the guide rod (9) and/or the wall of the calliper hole (21).

14. A disc brake according to any of the preceding claims, **characterised in that** the cap (20) forms a receiving space towards the front end of the guide rod (9) for receiving the first air bellows (12).

## Revendications

1. Frein à disque pour un véhicule utilitaire, ayant un étrier (2) de frein, qui embrasse un disque (3) de frein et qui est fixé avec possibilité de déplacement axial, rapporté au disque (3) de frein, par deux éléments de fixation, les éléments de fixation ayant chacun un longeron (9) de guidage, qui est relié fixement au support (1) de frein, dont, pour la possibilité de déplacement axial de l'étrier (2) de frein, l'un est guidé dans un palier lisse constitué en palier (4) fixe et l'autre dans un palier lisse constitué en palier (5) libre, dans lequel au moins le palier (5) libre a une douille (7) de guidage enserrant le longeron (9) de guidage, maintenue en étant empêchée de se déplacer dans un trou (21) de l'étrier (2) de frein et ayant un manchon (11) intérieur élastique, dans lequel au moins sur la partie d'extrémité, loin du disque (3) de frein, du longeron (9) de guidage, est monté un premier soufflet (12) roulant, la rendant étanche par rapport à l'atmosphère ambiante, et qui est fixé d'une part au longeron (9) de guidage et d'autre dans la douille (7) de guidage, le premier soufflet (12) roulant étant serré sur le longeron (9) de guidage, au moyen d'une coiffe (20) enfoncée dans le longeron (9) de guidage, dans lequel, du côté, opposé au premier soufflet (12) roulant, de la douille (7) de guidage, est raccordé un deuxième soufflet (14) roulant, qui est relié de l'autre côté au longeron (9) de guidage,
**caractérisé en ce que**
le deuxième soufflet (14) roulant est fixé à un anneau (15) de butée, qui est relié à la douille (7) de guidage en y étant de préférence encliqueté.

2. Frein à disque suivant la revendication 1, **caractérisé en ce que** le premier soufflet (12) roulant est constitué d'une seule pièce avec le manchon (11) intérieur en matière plastique.

3. Frein à disque suivant la revendication 1 ou 2, **caractérisé en ce que** le premier soufflet (12) roulant et le manchon (11) intérieur sont en un élastomère.

4. Frein à disque suivant l'une des revendications précédentes, **caractérisé en ce que** le premier soufflet (12) roulant est fixé, par son extrémité libre, au côté frontal du longeron (9) de guidage en y étant de préférence serré.

5. Frein à disque suivant l'une des revendications précédentes, **caractérisé en ce que** le deuxième soufflet (14) roulant a, à son bord loin de l'anneau (15) de butée, un bourrelet (17), qui pénètre dans une rainure (18) annulaire du longeron (9) de guidage.

6. Frein à disque suivant la revendication 5, **caractérisé en ce que** le bourrelet (17) est maintenu dans la rainure (18) annulaire par une bague (16) de maintien fixée dans l'étrier (2) de frein.

7. Frein à disque suivant l'une des revendications précédentes, **caractérisé en ce que** le deuxième soufflet (14) roulant est en un silicone résistant à la température.

8. Frein à disque suivant l'une des revendications précédentes, **caractérisé en ce que** le deuxième soufflet (14) roulant est injecté sur l'anneau (15) de butée, une liaison du deuxième soufflet (14) roulant comprenant une partie (14a) annulaire, des parties (14b) d'entretoise et une partie (14c) de liaison du deuxième soufflet (14) roulant.

9. Frein à disque suivant la revendication 8, **caractérisé en ce que** la partie (14a) annulaire est reçue dans une rainure (15a) annulaire faisant le tour de l'anneau (15) de butée, les parties (14b) d'entretoise étant disposées respectivement dans des rainures (15b), s'étendant dans la direction longitudinale du deuxième soufflet (14) roulant, de l'anneau (15) de butée et la partie (14c) de liaison entourant une partie (15c) de bord de l'anneau (15) de butée.

10. Frein à disque suivant la revendication 8 ou 9, **caractérisé en ce que** le deuxième soufflet (14a) roulant a une partie (14d) de profilage.

11. Frein à disque suivant la revendication 10, **caractérisé en ce que** la partie (14d) de profilage du deuxième soufflet (14) roulant a des rainures longitudinales.

12. Frein à disque suivant l'une des revendications précédentes, **caractérisé en ce qu'**un joint (25) est raccordé à l'anneau (15) de butée.

13. Frein à disque suivant la revendication 12, **caractérisé en ce que** le joint (25) ou le deuxième soufflet (14) roulant est pourvu, dans la partie de raccordement à l'anneau (15) de butée, d'au moins une lèvre (22) d'étanchéité faisant le tour, qui s'applique à la surface latérale du longeron (9) de guidage et/ou à la paroi du trou (21) de l'étrier.

14. Frein à disque suivant l'une des revendications précédentes, **caractérisé en ce que** la coiffe (20) de réception du premier soufflet (12) roulant forme, vers le côté frontal du longeron (9) de guidage, un espace de réception.
